# EUROPÄISCHE PATENTSCHRIFT

(11) **EP 3 722 165 B1**
(45) Veröffentlichungstag und Bekanntmachung des Hinweises auf die Patenterteilung: **29.12.2021**
(21) Anmeldenummer: 20165395.3
(22) Anmeldetag: 24.03.2020
(51) Int. Cl.: B60S 9/12, B60G 17/015, B66C 23/80

(54) **VERFAHREN ZUM ELEKTROHYDRAULISCHEN AUSRICHTEN VON TRAGKÖRPERN ODER ANHÄNGERN**
METHOD FOR ELECTRO-HYDRAULIC ALIGNMENT OF SUPPORT BODIES OR TRAILERS
PROCÉDÉ D'ALIGNEMENT ÉLECTROHYDRAULIQUE DES CORPS PORTEURS OU DE REMORQUES

(30) Priorität: 28.03.2019 DE 102019002237
(43) Veröffentlichungstag der Anmeldung: 14.10.2020
(73) Patentinhaber: EWO Fluid Power GmbH, 73277 Owen (DE)
(72) Erfinder: Evesque, Christian, 73275 Ohmden (DE); WOLF, Markus, 72587 Römerstein-Böhringen (DE)
(74) Vertreter: Schrooten, Rolf

(56) Entgegenhaltungen:
- EP-A1- 2 184 211
- EP-A2- 1 316 448
- DE-C1- 4 033 761
- US-A1- 2018 178 763

## Beschreibung

Die vorliegende Erfindung betrifft ein Verfahren zum mittels Hubstützen ausgeführten elektrohydraulischen Ausrichten eines sich im Stillstand befindenden Tragkörpers in eine vorbestimmte Ausrichtung, insbesondere in eine horizontale Ausrichtung, nach dem Oberbegriff von Anspruch 1.

Ein Tragkörper kann dabei insbesondere ein Fahrzeug, beispielsweise ein Kraftfahrzeug oder ein Fahrzeuganhänger, oder ein Fahrzeugaufbau sein. Als Fahrzeuganhänger kommen insbesondere LKW-Sattelanhänger oder Wohnwagen in Betracht, die nach dem Abkoppeln vom Zugfahrzeug üblicherweise horizontal ausgerichtet werden sollen. Darüber hinaus kann ein Tragkörper durch jeden Körper gebildet sein, der sich zum Ausrichten durch Hubstützen eignet, beispielsweise durch einen Tisch in der Handhabungstechnik.

Neben manuell betätigten, rein mechanisch wirkenden Stützen, die insbesondere zum Ausrichten von Wohnwagen verwendet werden, sind auch Systeme mit hydraulischen Stützen bekannt, die einzeln manuell angesteuert werden, was entsprechend lange dauert und hinsichtlich einer exakt horizontalen Ausrichtung relativ ungenau ist.

Bei der Ausführung des vorliegenden erfindungsgemäßen Verfahrens können Tragkörper durch Verstellen der Hubstützen in zwei voneinander verschiedenen vertikalen Ebenen um jeweils eine Schwenkachse gegenüber einer horizontalen Ausrichtung geneigt werden, wobei die Hubstützen hydraulisch mit einem Hydraulikaggregat verbunden sind, welches von einem Elektromotor angetrieben wird und von dem sie in Einfahrrichtung oder in Ausfahrrichtung betätigt werden können. Der Elektromotor des Hydraulikaggregats ist elektrisch mit einer eine Rechnereinheit umfassenden Steuereinheit verbunden, die auf diese Weise das Hydraulikaggregat computergesteuert ansteuern kann. Dabei werden Daten zu der jeweiligen Neigung des Tragkörpers bzw. Fahrzeuganhängers um die beiden Schwenkachsen gegenüber der horizontalen Ausrichtung durch jeweils mindestens einen Neigungssensor erfasst und auf elektronischem Wege über eine drahtgebundene und/oder drahtlose Übertragungsstrecke an die Steuereinheit übermittelt, welche dann anhand der übermittelten Daten Steuersignale erzeugt, vermittels derer die Hubstützen zum Nivellieren bzw. zum Ausrichten des Tragkörpers in die horizontale oder in eine andere gewünschte Orientierung angesteuert werden.

Aus der DE 40 33 761 C1 ist ein Verfahren zum Durchführen eines Nivelliervorgangs mittels hydraulischen Abstützzylindern bekannt, bei dem in jedem Zylinder der jeweils herrschende Druck erfasst und bei Ermittlung eines einen vorbestimmten Schwellenwert übersteigenden Druckanstieges in einem Abstützzylinder für diesen ein Drucksignal erzeugt wird, aufgrund dessen die weitere Versorgung des betreffenden Abstützzylinders mit Druckflüssigkeit von der Steuerlogik unterbunden wird.

Aus der DE 195 25 673 C1 ist ein mittels elektronischer Datenverarbeitung vollautomatisch arbeitendes Verfahren zur Niveauregulierung von Arbeitsgerätschaften bekannt, bei dem eine ursprüngliche Schräglage über Pendelpotentiometer als Ist-Niveau gemessen, mit einem vorgegebenen Soll-Niveau verglichen und im Anschluss daran das Arbeitsgerät durch Ausfahren von hydraulischen Aufstandsstützen auf dem Untergrund stabilisiert und horizontal und vertikal nivelliert wird. Dabei wird zur Beendigung des Nivelliervorgangs der Bodendruck der Aufstandsstützen gemessen.

Aus der DE 10 2007 030 107 B4 ist ein Verfahren und ein System zum elektrohydraulischen Ausrichten von sich im Stillstand befindenden Tragkörpern mittels hydraulischen Hubstützen bekannt, die über jeweils ein eigenes Mehrwegeventil angesteuert werden. Außerdem kann jede Hubstütze jeweils einen Druckschalter zur Feststellung des Bodenkontakts aufweisen.

Sowohl die Ansteuerung der Hubstützen über mehrere Mehrwegeventile als auch der Einsatz von Druckschaltern oder Drucksensoren zur Erfassung des Bodendrucks der Aufstandsstützen oder zur Erfassung von hydraulischen Betriebsdrücken in den Abstützzylindern ist mit einem relativ großen Aufwand und mit entsprechend hohen Kosten verbunden. Außerdem kann ein druckabhängiges System nur in Verbindung mit messbaren Drücken brauchbare Ergebnisse liefern, was bei einem geringen Gewicht eines zu nivellierenden Gegenstands nicht gewährleistet ist.

Aufgabe der vorliegenden Erfindung ist es daher, ein Verfahren der eingangs genannten Art bereitzustellen, das bei sicherem Bodenkontakt der Hubstützen eine vorbestimmte, insbesondere horizontale Ausrichtung von Tragkörpern auf besonders einfache und kostengünstige Weise ermöglicht und hierfür keine Drucksensoren benötigt.

Erfindungsgemäß wird diese Aufgabe durch ein Verfahren nach Anspruch 1 gelöst. Vorteilhafte Ausgestaltungen und zweckmäßige Weiterbildungen der Erfindung ergeben sich aus den abhängigen Ansprüchen.

Die erfindungsgemäße Lösung sieht vor, dass das Verfahren die folgenden Verfahrensschritte umfasst:
- mindestens eine erste Hubstütze, die bezüglich der ersten Schwenkachse auf einer ersten Seite des Tragkörpers angeordnet ist, wird zumindest soweit eingefahren oder ausgefahren, bis der erste Neigungssensor sowohl eine Veränderung der Neigung des Tragkörpers um die erste Schwenkachse als auch eine erste Zwischenausrichtung des Tragkörpers erfasst, die bezüglich der ersten Schwenkachse von der vorbestimmten Ausrichtung des Tragkörpers um einen vorgegebenen Zwischenwinkel abweicht,
- eine zweite Hubstütze, die der mindestens einen ersten Hubstütze bezüglich der ersten Schwenkachse gegenüberliegt, wird zumindest soweit ausgefahren, bis der zweite Neigungssensor sowohl eine Veränderung der Neigung des Tragkörpers um die zweite Schwenkachse als auch eine zweite Zwischenausrichtung des Tragkörpers erfasst, die bezüglich der zweiten Schwenkachse von der vorbestimmten Ausrichtung des Tragkörpers um einen vorgegebenen Zwischenwinkel abweicht,
- eine dritte Hubstütze, die der zweiten Hubstütze bezüglich der zweiten Schwenkachse gegenüberliegt, wird soweit ausgefahren, bis der zweite Neigungssensor bezüglich der zweiten Schwenkachse die vorbestimmte Ausrichtung des Tragkörpers erfasst,
- falls der erste Neigungssensor danach eine Ausrichtung des Tragkörpers erfasst, die bezüglich der ersten Schwenkachse von der vorbestimmten Ausrichtung des Tragkörpers abweicht, wird die mindestens eine erste Hubstütze soweit eingefahren oder ausgefahren, bis der erste Neigungssensor bezüglich der ersten Schwenkachse die vorbestimmte Ausrichtung des Tragkörpers erfasst.

Dabei bedeutet das Einfahren einer Hubstütze, dass der auf den Untergrund aufsetzbare Abstützbereich der Hubstütze nach oben hochgefahren wird, so dass sich der hiervon getragene Tragkörper dem Untergrund annähert oder der Abstützbereich der Hubstütze sich vom Untergrund entfernt, wenn der Tragkörper anderweitig abgestützt ist. Dementsprechend bedeutet das Ausfahren einer Hubstütze, dass der auf den Untergrund aufsetzbare Abstützbereich der Hubstütze nach unten runtergefahren wird, so dass er sich dem Untergrund annähert oder den Tragkörper nach dem Aufsetzen auf dem Untergrund anhebt.

Wesentlich ist es bei dem Verfahren, dass für das Beenden einer Ausfahrbewegung einer Hubstütze stets nur die von einem Neigungssensor gelieferten Signale ausgewertet werden. Das Verfahren nutzt hierbei aus, dass eine Veränderung der Neigung um die erste oder die zweite Schwenkachse beim Einfahren oder Ausfahren von Hubstützen nur dann erfolgen kann, wenn die einfahrende oder ausfahrende Hubstütze noch Kontakt mit dem Boden hat oder schon auf dem Boden aufgesetzt hat.

Wesentlich ist es ferner, dass bezüglich beider Schwenkachsen nicht direkt die vorbestimmte, beispielsweise horizontale Ausrichtung des Tragkörpers, sondern zunächst eine Zwischenausrichtung des Tragkörpers angesteuert wird, die von der angestrebten Ausrichtung um einen bestimmten Zwischenwinkel abweicht. Diese Zwischenausrichtung kann der Tragkörper bezüglich der ersten Schwenkachse je nach seiner Ausgangslage entweder durch Einfahren von mindestens einer ersten Hubstütze von oben oder durch Ausfahren von mindestens einer ersten Hubstütze von unten anfahren.

Ein erheblicher Vorteil liegt dabei darin, dass bei der Ausfahrbewegung oder Einfahrbewegung einer Hubstütze weder Drucksensoren noch Druckschalter für die Ermittlung eines Endpunktes erforderlich sind und trotzdem ein ausreichender Bodenkontakt der Hubstützen mit Sicherheit festgestellt werden kann. Die hierfür benötigten Neigungssensoren sind auch bei herkömmlichen automatischen Verfahren zur horizontalen Ausrichtung erforderlich und somit ohnehin vorhanden. Da hierfür keine Drücke erfasst werden müssen, kann das erfindungsgemäße Verfahren auch bei Tragkörpern und Fahrzeuganhängern mit nur geringem Gewicht zuverlässig angewendet werden.

Ein weiterer Vorteil liegt darin, dass für die Ansteuerung der Hubstützen keine Mehrzahl von aufwendigen Mehrwegeventilen, sondern lediglich sehr viel einfachere und gewichtssparendere Sicherheitsventile bzw. Absperrventile benötigt werden, um die Hubstützen in der zur Erreichung der vorbestimmten Ausrichtung erforderlichen Weise ansteuern zu können.

Deshalb erlaubt das erfindungsgemäße Verfahren eine besonders einfache und dennoch standsichere, vorzugsweise horizontale Ausrichtung von Tragkörpern, die ohne Mehrwegeventile und ohne Drucksensoren bzw. Druckschalter besonders kostengünstig erreicht werden kann.

Gemäß einer besonders bevorzugten Ausführungsform des erfindungsgemäßen Verfahrens ist vorgesehen, dass die vorbestimmte Ausrichtung des Tragkörpers eine horizontale Ausrichtung ist. Unter einer horizontalen Ausrichtung eines Tragkörpers oder Fahrzeuganhängers im Sinne dieser Anmeldung wird dabei die Positionierung einer Grundfläche des Tragkörpers bzw. des Fahrzeuganhängers in einer senkrecht zur Lotrichtung verlaufenden waagerechten Ebene verstanden. Aber auch wenn ein Tragkörper in den meisten Fällen horizontal ausgerichtet bzw. nivelliert werden soll, so ist das erfindungsgemäß Verfahren nicht darauf beschränkt, sondern es ermöglicht ebenso ein elektrohydraulisches Ausrichten in eine für einen bestimmten Anwendungsfall erforderliche oder gewünschte andere Orientierung, die um eine beliebige Achse gegenüber einer horizontalen Ausrichtung geneigt ist und für diesen Anwendungsfall dann die vorbestimmte Ausrichtung darstellt.

Besonders vorteilhaft ist es, wenn die erste Zwischenausrichtung derart definiert ist, dass in der ersten Zwischenausrichtung die erste Seite des Tragkörpers oberhalb der bezüglich der ersten Schwenkachse gegenüberliegenden Seite des Tragkörpers liegt.

Günstig ist es ferner, wenn die zweite Hubstütze auf der Seite des Tragkörpers liegt, die vor dem Ausfahren der zweiten Hubstütze unterhalb der dieser Seite bezüglich der zweiten Schwenkachse gegenüberliegenden Seite des Tragkörpers liegt. Dadurch können die Ausfahrwege der Hubstützen möglichst gering gehalten werden.

Auch hinsichtlich der zweiten Zwischenausrichtung ist es besonders vorteilhaft, wenn diese so definiert ist, dass in der zweiten Zwischenausrichtung die Seite des Tragkörpers, an welcher die zweite Hubstütze angeordnet ist, oberhalb der bezüglich der zweiten Schwenkachse gegenüberliegenden Seite des Tragkörpers liegt.

Gemäß einer besonders vorteilhaften Ausführungsform des Verfahrens ist der Zwischenwinkel derart festgelegt, dass er einen Wert von 0,04° bis 2°, vorzugsweise von 0,06° bis 1° und besonders bevorzugt von 0,08° bis 0,5° annimmt. Insbesondere kann der Zwischenwinkel 0,1° betragen. Wenn der Zwischenwinkel zur Steuerung des erfindungsgemäßen Verfahrens auf einen Wert von 0,1° programmiert wird, kann das bei der Ausführung des Verfahrens in der Realität einen Wert von 0,2° bedeuten. Der Zwischenwinkel kann für beide Schwenkachsen gleich oder verschieden festgelegt sein.

Besonders günstig ist es, wenn die beiden Schwenkachsen in einer gemeinsamen Ebene verlaufen, welche vorzugsweise mit der auszurichtenden Grundfläche des Tragkörpers bzw. Fahrzeuganhängers zusammenfällt oder parallel dazu verläuft.

Eine besonders einfache Ausrichtung kann dabei dadurch erreicht werden, dass die beiden Schwenkachsen in der gemeinsamen Ebene senkrecht zueinander verlaufen.

Gemäß einer weiteren besonders vorteilhaften Ausführungsform des Verfahrens ist der Tragkörper ein sich im Stillstand befindender Fahrzeuganhänger, insbesondere einen LKW-Sattelanhänger oder ein Wohnwagen, der an ein Zugfahrzeug angekoppelt ist.

Dabei ist es für eine einfache Ausführbarkeit von Vorteil, wenn die erste Schwenkachse parallel zu mindestens einer Radachse des Fahrzeuganhängers verläuft.

Außerdem wird hierbei weiterhin vorgeschlagen, dass in einem ersten Verfahrensschritt mindestens eine vordere Hubstütze, die bezüglich der ersten Schwenkachse in einem vorderen Bereich des Anhängers angeordnet ist, zumindest soweit ausgefahren wird, bis der vordere Bereich des Anhängers soweit angehoben ist, dass der Anhänger durch Vorfahren des Zugfahrzeugs von diesem abgekoppelt werden kann

Dabei ist es weiterhin günstig, wenn die erste Seite des Tragkörpers durch den vorderen Bereich des Anhängers gebildet und die mindestens eine erste Hubstütze zum Erreichen der ersten Zwischenausrichtung des Tragkörpers eingefahren wird.

Nach einer anderen ebenfalls besonders vorteilhaften Ausführungsform des Verfahrens ist der Tragkörper ein Gestell oder ein Tisch einer Handhabungsvorrichtung, beispielsweise innerhalb einer Fertigungs- und/oder Montageanlage.

Besonders vorteilhaft ist es, wenn die mindestens eine erste Hubstütze, die bezüglich der ersten Schwenkachse auf einer ersten Seite des Tragkörpers angeordnet ist, durch mindestens zwei erste Hubstützen gebildet ist, die bezüglich der zweiten Schwenkachse auf einander gegenüberliegenden Seiten des Tragkörpers angeordnet sind und die beim Einfahren oder Ausfahren der mindestens einen ersten Hubstütze gleichzeitig verfahren werden. Dabei sind die mindestens zwei ersten Hubstützen vorteilhafterweise derart hydraulisch miteinander verbunden, dass während des Ausfahrens der zweiten Hubstütze sowie während des Ausfahrens der dritten Hubstütze ein Fluidaustausch zwischen den beiden ersten Hubstützen möglich ist.

Dabei können die mindestens zwei ersten Hubstützen über eine Leitungsverzweigung, etwa ein T-Stück, und eine gemeinsame Hydraulikleitung an ein den mindestens zwei ersten Hubstützen gemeinsames Hydraulikaggregat angeschlossen sein. Vorzugsweise können alle Hubstützen an ein gemeinsames Hydraulikaggregat angeschlossen sein.

Ferner kann dabei zwischen der Leitungsverzweigung und dem zumindest für die beiden ersten Hubstützen gemeinsamen Hydraulikaggregat ein gemeinsames Absperrventil zwischengefügt sein.

Alternativ kann zwischen der Leitungsverzweigung und jeder der beiden ersten Hubstützen auch jeweils ein eigenes Absperrventil zwischengefügt sein.

Ebenso ist es von Vorteil, wenn auch zwischen den Hydraulikzylindern der übrigen Hubstützen und dem Hydraulikaggregat jeweils ein Absperrventil zwischengefügt ist. Die Zwischenventile dienen nach dem Erreichen der vorbestimmten Ausrichtung auch als Sicherheitsventil zum Halten der Ausrichtung. Ein Absperrventil ist dabei deutlich kostengünstiger und gewichtssparender als ein Mehrwegeventil, welches zur Ansteuerung der Hubstützen bei dem erfindungsgemäßen Verfahren entweder auf nur ein Stück für alle Hubstützen beschränkt sein soll oder sogar vollständig vermieden werden soll.

Für ein einfach auszuführendes Ausfahren und Einfahren der Hubstützen ist es von Vorteil, wenn diese jeweils einen doppeltwirkenden Hydraulikzylinder umfassen.

Gemäß einer besonders bevorzugten Ausführungsform des Verfahrens wird vorgeschlagen, dass ein gemeinsames reversierbares Hydraulikaggregat verwendet wird. Hierbei ist es von Vorteil, dass keine zusätzlichen Wegeventile zum Umkehren der Strömungsrichtung des Hydraulikfluids erforderlich sind, da dies durch Umkehren der Drehrichtung des Elektromotors erreicht werden kann. Alternativ kann eine Umkehr der Strömungsrichtung aber auch durch ein normales Hydraulikaggregat in Kombination mit einem Wegeventil erreicht werden, was auch größere Volumenströme erlaubt, so dass das Verfahren schneller durchgeführt werden kann. Dabei reicht ein einziges Wegeventil aus.

Alternativ hierzu ist es auch vorstellbar, dass der Hydraulikzylinder jeder Hubstütze jeweils ein eigenes reversierbares Hydraulikaggregat für seine Betätigung aufweist.

Eine besonders sichere und platzsparende Ausführung kann dabei dadurch erreicht werden, dass die Absperrventile in den Boden des jeweiligen Hydraulikzylinders integriert sind.

Besonders vorteilhaft ist es, wenn zwischen dem Hydraulikaggregat und jeder Hubstütze jeweils ein Stromregelventil, vorzugsweise jeweils in Kombination mit Rückschlagventilen, eingefügt ist. Auf diese Weise kann auch ein Anheben oder Absenken des zuvor in die vorbestimmte Ausrichtung gebrachten Tragkörpers ausgeführt werden, ohne seine Ausrichtung dabei zu verändern.

Um die Einhaltung der vorbestimmten Ausrichtung des Tragkörpers auch nach einem Anheben oder Absenken des ausgerichteten Tragkörpers möglichst exakt gewährleisten zu können, wird gemäß einer besonders vorteilhaften Ausführungsform vorgeschlagen, dass nach Abschluss des Verfahrens alle Hubstützen gemeinsam eingefahren oder ausgefahren werden, und dass danach die Neigung des Tragkörpers um die beiden Schwenkachsen gegenüber der vorbestimmten Ausrichtung durch die Neigungssensoren erfasst wird, woraufhin das Verfahren gegebenenfalls zumindest bezüglich einer Schwenkachse erneut durch geführt wird, falls mindestens ein Neigungssensor eine von der vorbestimmten Ausrichtung des Tragkörpers abweichende Ausrichtung des Tragkörpers erfasst.

Das erfindungsgemäße Verfahren ermöglicht auf einfach Weise eine computergesteuert bzw. automatisch erfolgende Nivellierung bzw. Ausrichtung von Tragkörpern oder Fahrzeuganhängern in eine vorbestimmte, insbesondere horizontale Ausrichtung, die einen sicheren Bodenkontakt der Hubstützen gewährleistet.

Weitere Vorteile und Merkmale der Erfindung ergeben sich aus der nachfolgenden Beschreibung und den in den Zeichnungen dargestellten Ausführungsbeispielen.

Es zeigen:
- Figur 1:: schematische Darstellung eines Wohnwagen-Chassis, das zur Durchführung des erfindungsgemäßen Verfahrens eingerichtet ist,
- Figur 2:: schematische Darstellung eines LKW-Auflieger-Chassis, das zur Durchführung des erfindungsgemäßen Verfahrens eingerichtet ist,
- Figur 3:: Hydraulikschaltplan für das Wohnwagen-Chassis aus Figur 1,
- Figur 4:: Hydraulikschaltplan für das LKW-Auflieger-Chassis aus Figur 2,
- Figur 5:: Hydraulikschaltplan für eine alternative Ausführungsform mit vier Hubstützen, und
- Figur 6:: Hydraulikschaltplan für eine zu Figur 5 abgewandelte Ausführungsform.

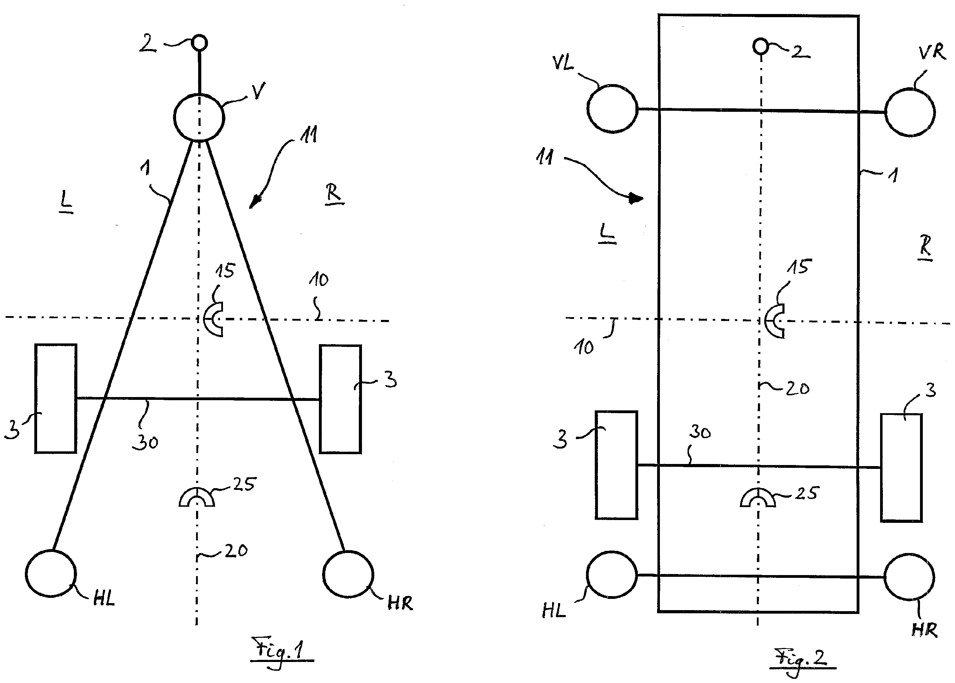

Bei dem in Figur 1 dargestellten Ausführungsbeispiel ist der Tragkörper 11 durch ein Chassis 1 eines Wohnwagen-Anhängers gebildet. Das Chassis 1 weist hinter der Kupplungsvorrichtung 2 eine vordere Hubstütze V und hinter den Rädern 3 eine hintere Hubstütze HL an der linken Seite L sowie eine hintere Hubstütze HR an der rechten Seite R auf. Die Hubstützen HL und HR sind unterhalb des Anhängerbodens montiert und können beispielsweise von der Art sein, wie sie in der älteren Patentanmeldung DE 10 2017 124 198 A1 der Anmelderin beschrieben ist, auf die insofern Bezug genommen wird. Jede Hubstütze umfasst einen doppeltwirkenden Hydraulikzylinder, durch den sie nach unten gegen den Untergrund ausgefahren oder nach oben gegen das Anhängerchassis 1 eingefahren werden kann.

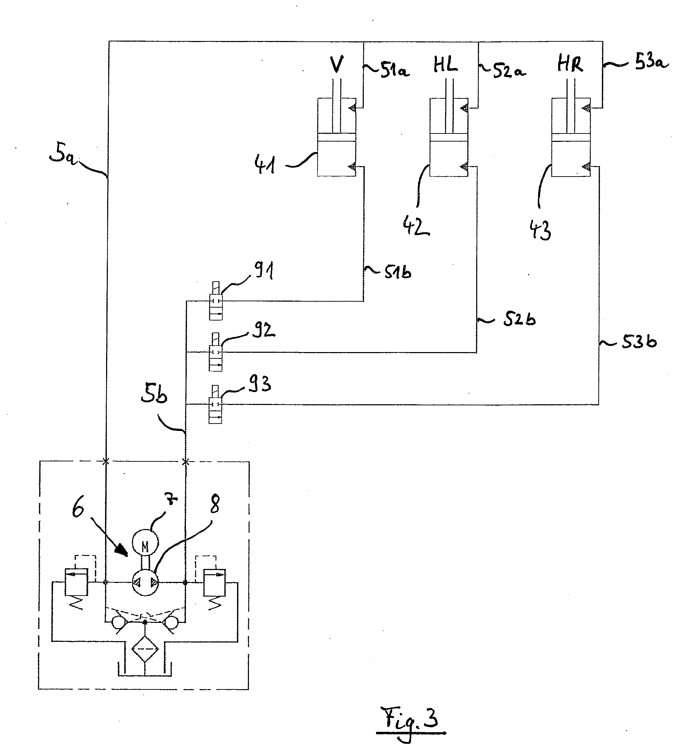

Gemäß Figur 3 werden die drei Hydraulikzylinder 41, 42 und 43 der drei Hubstützen V, HL und HR über hydraulische Leitungen 5a und 5b an ein reversierbares Hydraulikaggregat 6 angeschlossen, welches durch eine von einem Elektromotor 7 angetriebene Hydraulikpumpe 8 gebildet ist. Durch eine Drehrichtungsumkehr des Elektromotors 7 kann die Förderrichtung der Hydraulikpumpe 8 umgekehrt werden. Hierdurch wird ein besonders einfacher hydraulischer Schaltungsaufbau ermöglicht, bei dem keine Mehrwegeventile für das Ein- und Ausfahren der Hydraulikzylinder erforderlich sind. Die beiden Druckanschlüsse der Hydraulikzylinder 41, 42 und 43 sind hier lediglich über eine einfache Ringleitung 5a, 5b mit der Hydraulikpumpe 8 verbunden, wobei sich beide Leitungszweige 5a und 5b zu den Hydraulikzylindern hin in jeweils drei Leitungen 51a, 52a und 53a bzw. 51b, 52b und 53b aufteilen. Für jeden Hydraulikzylinder 41, 42 und 43 ist jeweils ein Absperrventil 91, 92 bzw. 93 in einen Leitungszweig 51b, 52b und 53b zwischengeschaltet. So kann durch einzelnes Ansteuern der Absperrventile 91, 92 bzw. 93 durch eine hier nicht näher dargestellte Steuereinheit jeder Hydraulikzylinder 41, 42 bzw. 43 und somit auch die jeweils zugehörige Hubstütze V, HL bzw. HR gezielt betätigt werden. Die Absperrventile 91, 92 und 93 können bei abgeschaltetem Hydraulikaggregat auch als Sicherheitsventile zum Blockieren der Hydraulikzylinder bzw. der Hubstützen dienen.

Die drei Hubstützen V, HL und HR dienen in diesem Ausführungsbeispiel dazu, die durch das Chassis 1 gebildete Grundfläche des Anhängers und somit auch den gesamten Wohnwagen-Anhänger in eine horizontale Ausrichtung zu bringen. Dazu kann der Anhänger durch Einfahren oder Ausfahren einer oder mehrerer Hubstützen um zwei voneinander verschiedene Schwenkachsen 10 und 20 geneigt werden. Die Schwenkachsen 10 und 20 sind senkrecht zueinander ausgerichtet, wobei die erste Schwenkachse 10 parallel zu der die beiden Räder 3 lagernden Radachse 30 verläuft, wohingegen die zweite Schwenkachse 20 senkrecht zur Radachse 30 und durch die Kupplungsvorrichtung 2 verläuft. Die Neigung des Anhängerchassis 1 gegenüber einer waagerechten bzw. horizontalen Ebene um diese beiden Schwenkachsen 10 und 20 wird durch zwei Neigungssensoren 15 und 25 erfasst. Der erste Neigungssensor 15 erfasst die nach vorne oder hinten weisende Neigung des Anhängerchassis 1 bezüglich der ersten Schwenkachse 10, während der zweite Neigungssensor 25 die seitliche Neigung des Anhängerchassis 1 bezüglich der zweiten Schwenkachse 20 erfasst. Die so ermittelten Daten zur Neigung des Anhängers werden elektronisch an die Steuereinheit übermittelt, welche anhand dieser Neigungsdaten Steuersignale erzeugt, vermittels derer die Hubstützen V, HL und HR zum horizontalen Ausrichten des Anhänger-chassis 1 folgendermaßen angesteuert werden:
Ausgehend von dem an ein Zugfahrzeug angekoppelten Zustand wird bei Stillstand des Anhängers in einem ersten Verfahrensschritt zunächst die vordere Hubstütze V von der Steuereinheit soweit nach unten ausgefahren, bis die Kupplungsvorrichtung 2 am vorderen Ende des Anhängers soweit angehoben ist, dass der Anhänger durch Vorfahren des Zugfahrzeugs von diesem abgekoppelt werden kann. Die vordere Hubstütze V hat dabei einen sicheren Kontakt zum Untergrund. Sie befindet sich in dem vorderen Bereich des Anhängers, der hier bezüglich der ersten Schwenkachse 10 die erste Seite des Tragkörpers 11 bildet und nach dem ersten Verfahrensschritt bezüglich der ersten Schwenkachse 10 höher liegt als der hintere Bereich des Anhängers.

Nach dem Vorfahren des Zugfahrzeugs wird in einem zweiten Verfahrensschritt die vordere Hubstütze V wieder nach oben hochgefahren bzw. eingefahren, wodurch sich die Neigung des Anhängers um die Radachse 30 und somit auch um die erste Schwenkachse 10 ändert. Diese Neigungsveränderung des durch das Anhänger-Chassis 1 gebildeten Tragkörpers 11 wird durch den ersten Neigungssensor 15 erfasst und an die Steuereinheit übermittelt. Die vordere Hubstütze V wird von der Steuereinheit in diesem zweiten Verfahrensschritt soweit nach oben eingefahren, bis der vordere Bereich des Anhängers in einer ersten Zwischenausrichtung bezüglich der ersten Schwenkachse 10 nur noch geringfügig höher als der hintere Bereich des Anhängers liegt. Diese erste Zwischenausrichtung weicht bezüglich der ersten Schwenkachse 10 von einer horizontalen Ausrichtung des Tragkörpers 11 um einen Zwischenwinkel α ab, der beispielsweise zwischen 0,5° und 1° liegt.

Danach wird in einem dritten Verfahrensschritt eine der beiden hinteren Hubstützen HL oder HR nach unten ausgefahren. Sofern sich der durch das Anhänger-Chassis 1 gebildete Tragkörper 11 bezüglich der zweiten Schwenkachse 20 nicht in einer horizontalen Ausrichtung befindet, wird von der Steuereinheit hierbei diejenige der beiden hinteren Hubstützen HL oder HR ausgefahren, die sich an der bezüglich der zweiten Schwenkachse 20 tieferliegenden Seite des Anhängers befindet. Die sich hierdurch ergebende Neigungsveränderung des Anhängers bzw. Tragkörpers 11 um die zweite Schwenkachse 20 wird durch den zweiten Neigungssensor 25 erfasst und an die Steuereinheit übermittelt. Die betroffene hintere Hubstütze HL oder HR wird von der Steuereinheit in diesem dritten Verfahrensschritt soweit nach unten ausgefahren, bis die entsprechende linke oder rechte Seite des Anhängers in einer zweiten Zwischenausrichtung bezüglich der zweiten Schwenkachse 20 geringfügig höher als die gegenüberliegende rechte oder linke Seite des Anhängers liegt. Hierdurch ist sichergestellt, dass auch die nun ausgefahrene Hubstütze HL oder HR mit Sicherheit auf dem Untergrund aufgesetzt hat. Bezüglich der zweiten Schwenkachse 20 weicht auch die zweite Zwischenausrichtung von einer horizontalen Ausrichtung des Tragkörpers 11 um einen Zwischenwinkel β ab, der vorzugsweise zwischen 0,5° und 1° liegt.

Danach wird in einem vierten Verfahrensschritt auch die andere der beiden hinteren Hubstützen HR oder HL, die bisher noch nicht verfahren wurde, nach unten ausgefahren. Dabei wird diese hinteren Hubstützen HR oder HL von der Steuereinheit in diesem vierten Verfahrensschritt soweit ausgefahren, bis der zweite Neigungssensor 25 bezüglich der zweiten Schwenkachse 20 eine horizontale Ausrichtung des Tragkörpers 11 erfasst. Auf diese Weise ist gewährleistet, dass nun auch die zuletzt ausgefahrene Hubstütze HR oder HL mit Sicherheit auf dem Untergrund aufgesetzt hat.

Anschließend erfasst der erste Neigungssensor 15 die sich nach der Ausführung des dritten und vierten Verfahrensschritts ergebende Ausrichtung des Tragkörpers 11 bezüglich der ersten Schwenkachse 10. Falls der Tragkörper 11 und somit auch der Anhänger dabei bezüglich der ersten Schwenkachse 10 horizontal ausgerichtet ist, ist das Verfahren beendet und die gewünschte horizontale Ausrichtung des Tragkörpers 11 bzw. Anhängers um die beiden senkrecht zueinander ausgerichteten Schwenkachsen 10 und 20 ist jetzt schon erreicht. Andernfalls schließt sich noch ein abschließender fünfter Verfahrensschritt an.

Falls der erste Neigungssensor 15 nach der Ausführung des dritten und vierten Verfahrensschritts eine Ausrichtung des Tragkörpers 11 erfasst, die bezüglich der ersten Schwenkachse 10 noch von einer horizontalen Ausrichtung des Tragkörpers 11 abweicht, fährt die Steuereinheit in einem fünften Verfahrensschritt die vordere Hubstütze V soweit ein oder aus, bis der erste Neigungssensor 15 auch bezüglich der ersten Schwenkachse 10 eine horizontale Ausrichtung des Tragkörpers 11 erfasst.

Sodann befindet sich das Anhängerchassis 1 und somit auch der gesamte Wohnwagen in der gewünschten horizontalen Ausrichtung. Gleichzeitig ist ein sicherer Bodenkontakt aller drei Hubstützen V, HL und HR gewährleistet, ohne dass hierfür die Erfassung von hydraulischen Betriebsdrücken in den Hydraulikzylindern 41, 42 oder 43 oder von Druckwerten an den auf den Untergrund aufsetzenden Fußbereichen der Hubstützen erforderlich ist. Auch werden keine aufwendigen Mehrwegeventile für den hydraulischen Schaltungsaufbau benötigt.

Bei dem in Figur 2 dargestellten Chassis 1 eines LKW-Aufliegers sind im vorderen Bereich zwei vordere Hubstützen vorgesehen, nämlich eine vordere linke Hubstütze VL an der linken Seite L sowie eine vordere rechte Hubstütze VR an der rechten Seite R. Zusammen mit der hinteren linken Hubstütze HL und der hinteren rechten Hubstütze HR hat das LKW-Auflieger-Chassis 1 somit insgesamt vier Hubstützen.

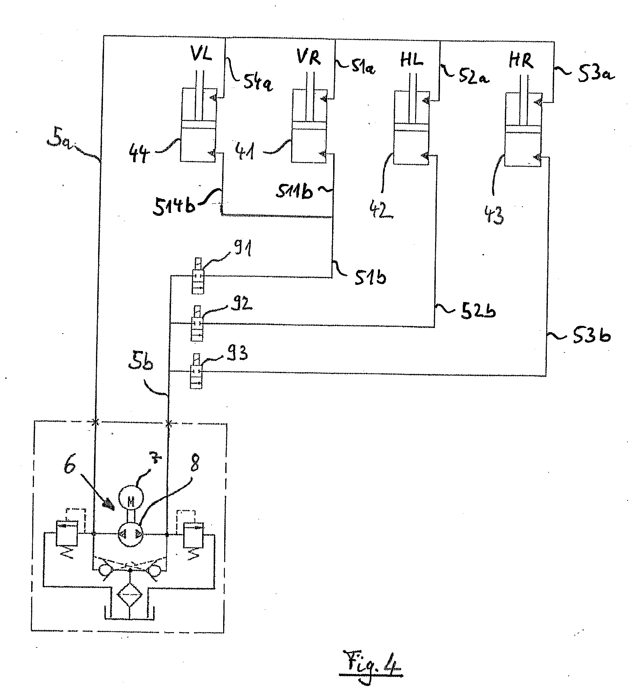

Die vier Hydraulikzylinder 41, 42, 43, und 44 dieser vier Hubstützen VR, HL, HR und VL sind gemäß dem in Figur 4 dargestellten Hydraulikschaltplan über in Form einer Ringleitung ausgeführte hydraulische Leitungen 5a und 5b mit dem Hydraulikaggregat 6 verbunden, welches auch in diesem Ausführungsbeispiel mit einer von einem Elektromotor 7 angetriebenen Hydraulikpumpe 8 reversierbar ausgebildet ist. Während sich der erste Leitungszweig 5a zu den Hydraulikzylindern hin in vier Leitungen 51a, 52a, 53a und 54a aufteilt, teilt sich der zweite Leitungszweig 5b wie auch bei dem in Figur 3 dargestellten Hydraulikschaltplan für das in Figur 1 gezeigte Anhängerchassis 1 zu den vier Hydraulikzylindern hin nur in drei Leitungen 51b, 52b und 53b auf, in denen jeweils ein Absperrventil 91, 92 bzw. 93 zwischengeschaltet ist. Wesentlich bei dieser Ausführung ist es, dass sich die Leitung 51b hinter dem Absperrventil 91 nochmals in zwei Leitungen 511b und 514b aufteilt, welche jeweils an einen Hydraulikzylinder 41 bzw. 44 der beiden vorderen Hubstützen VR und VL angeschlossen sind.

So kann durch einzelnes Ansteuern der Absperrventile 92 oder 93 durch eine auch hier nicht dargestellte Steuereinheit jeder Hydraulikzylinder 42 oder 43 der beiden hinteren Hubstützen HL bzw. HR gezielt einzeln betätigt werden. Im Gegensatz dazu werden durch das einzelne Ansteuern des Absperrventils 91 durch die Steuereinheit beide Hydraulikzylinder 41 und 44 der beiden vorderen Hubstützen VR und VL gleichzeitig zusammen betätigt. Auf diese Weise wird für die vier Hubstützen VL, VR, HL und HR eine Drei-Punkt-Abstützung simuliert, so dass sie mit der zuvor zu den Figuren 1 und 3 beschriebenen elektronischen Nivellierungssteuerung der Drei-Punkt-Abstützung bzw. der dabei eingesetzten Steuerungs-Software kompatibel ist. Das erfindungsgemäße Verfahren zur Erreichung einer horizontalen Ausrichtung des Chassis 1 und somit auch des gesamten LKW-Aufliegers kann daher genauso durchgeführt werden, wie es vorangehend für den in Figur 1 dargestellten Wohnwagen beschrieben wurde.

Ein weiterer Vorteil besteht darin, dass die Hydraulikflüssigkeit frei zwischen den beiden Hydraulikzylindern 41 und 44 hin- und her fließen kann, wodurch sich die beiden vorderen Hubstützen VR und VL bezüglich der zweiten Schwenkachse 20 automatisch auf die von den beiden hinteren Hubstützen HL und HR vorgegebene Ausrichtung des Tragkörpers 11 einstellen.

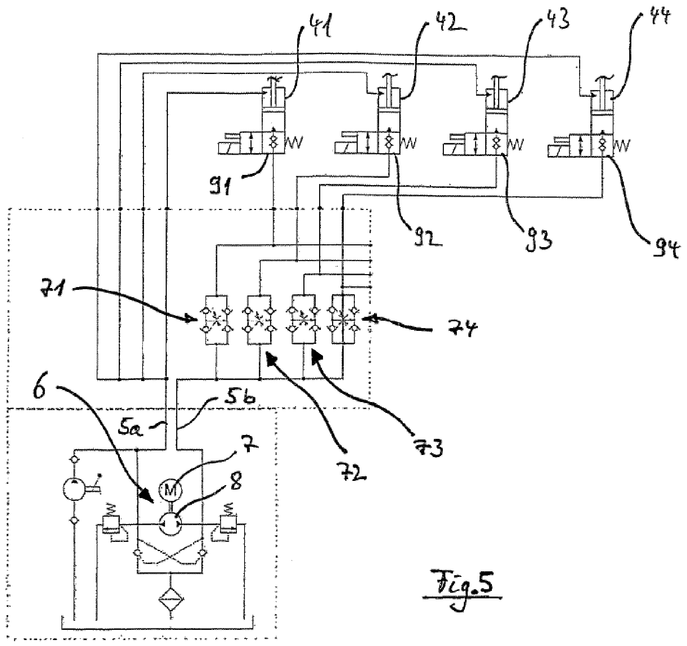

Gemäß der in Figur 5 dargestellten Ausführungsvariante sind vier Hydraulikzylinder 41, 42, 43 und 44 von vier hier nicht näher dargestellten Hubstützen eines hier ebenfalls nicht gezeigten Tragkörpers über hydraulische Leitungen 5a und 5b an ein Hydraulikaggregat 6 mit einer von einem Elektromotor 7 angetriebenen Hydraulikpumpe 8 angeschlossen. Die beiden Leitungszweige 5a und 5b teilen sich zu den Druckanschlüssen der Hydraulikzylinder hin in jeweils vier Leitungen auf. Auch bei dieser Ausführungsvariante ist für jeden Hydraulikzylinder 41, 42, 43 und 44 jeweils ein Absperrventil 91, 92, 93 bzw. 94 in einen Leitungszweig 5b zwischengeschaltet. Allerdings sind die Absperrventile 91, 92, 93 und 94 hier in den Boden des jeweiligen Hydraulikzylinders 41, 42, 43 und 44 integriert. Durch einzelnes Ansteuern der Absperrventile 91, 92, 93 bzw. 94 durch eine hier nicht nähre dargestellte Steuereinheit kann jeder Hydraulikzylinder 41, 42, 43 bzw. 44 und somit auch die jeweils zugehörige Hubstütze VR, HL, HR bzw. VL gezielt betätigt werden. Die Absperrventile 91, 92, 93 und 94 können bei abgeschaltetem Hydraulikaggregat 6 auch als Sicherheitsventile zum Blockieren der Hydraulikzylinder bzw. der Hubstützen dienen.

Zwischen der Leitung 5b und den Ventilen 91, 92, 93 und 94 sind Stromregelventile 71, 72, 73 und 74 mit entsprechenden Rückschlagventilen eingefügt, so dass jedem Zylinder 41, 42, 43 und 44 ein geregelter Volumenstrom zugeführt werden kann, wodurch eine geregelte und gleichmäßige Bewegung aller Zylinder 41, 42, 43 und 44 sowohl in Ausfahrrichtung als auch in Einfahrrichtung erreicht wird. Diese Ausführungsform stellt eine besonders kostengünstige Variante dar, um ein Fahrzeug oder einen Tisch einer Vorrichtung mit vier Stützen über einen längeren Hubweg in einer vorgewählten, vorzugsweise horizontalen Lage hoch oder runter zu verfahren, ohne dabei auf aufwendige Wegmesssysteme zurückgreifen zu müssen.

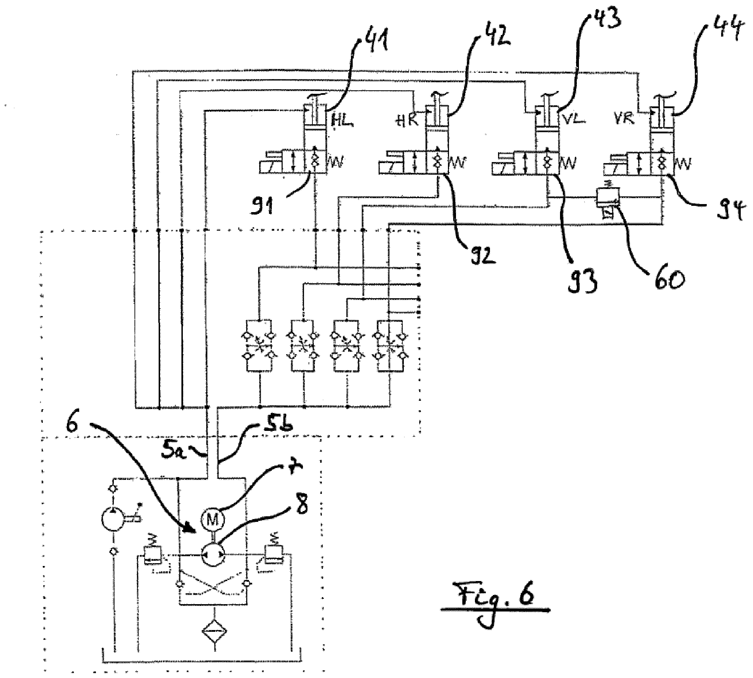

Bei der in Figur 6 gezeigten Abwandlung der Ausführungsform von Figur 5 ist zwischen den beiden Hydraulikzylindern 43 und 44, die zu den beiden vorderen Hubstützen VL und VR gehören, ein zusätzliches Sperrventil 60 zwischengeschaltet. Wenn dieses Sperrventil 60 geöffnet ist, kann die Hydraulikflüssigkeit frei zwischen diesen beiden Hydraulikzylindern 43 und 44 hin- und her fließen, wodurch sich die beiden vorderen Hubstützen VL und VR bezüglich der zweiten Schwenkachse 20 automatisch entsprechend der von den beiden hinteren Hubstützen HL und HR vorgegebenen Ausrichtung des Tragkörpers einstellen. Wenn das Sperrventil 60 hingegen geschlossen ist, sind die beiden vorderen Hubstützen VL und VR gegen unerwünschtes Verstellen infolge gegenseitigen Austauschs der Hydraulikflüssigkeit gesichert.

So kann mit Hilfe des Sperrventils 60 wechselweise ein Nivellier-Modus oder ein Fahr-Modus erzeugt werden. Der Nivellier-Modus erfolgt bei geöffnetem Sperrventil 60 in der oben zu den Figuren 1 und 3 beschriebenen Art. Der Fahr-Modus zum Einfahren oder Ausfahren der Hubstützen erfolgt bei geschlossenem Sperrventil 60 in der vorangehend zu Figur 5 beschriebenen Art.

Beispielsweise kann ein Bewegungsablauf dabei eine erste Nivellierung im Nivellier-Modus, gefolgt von einer Ein- oder Ausfahrbewegung im Fahr-Modus umfassen. Vorzugsweise kann sich nach dem Fahr-Modus noch eine zweite Nivellierung im Nivellier-Modus anschließen, um von den Neigungssensoren 15 und/oder 25 gegebenenfalls festgestellte Abweichungen der nach dem Fahr-Modus vorliegenden Ausrichtung des Tragkörpers 11 von der zuvor erfolgten Nivellierung auszugleichen.

## Patentansprüche

1. Verfahren zum elektrohydraulischen Ausrichten eines sich im Stillstand befindenden Tragkörpers (11), insbesondere eines Fahrzeugs oder eines Fahrzeugaufbaus, mittels Hubstützen (V, VL, VR, HL, HR) in eine vorbestimmte Ausrichtung,
wobei durch Verstellen der Hubstützen (V, VL, VR, HL, HR) der Tragkörper (11) um zwei Schwenkachsen (10, 20) in zwei voneinander verschiedenen Ebenen gegenüber einer horizontalen Ausrichtung geneigt werden kann,
wobei die Hubstützen (V, VL, VR, HL, HR) zum Ein- und/oder Ausfahren von einem Hydraulikaggregat (6) betätigt werden,
wobei die Hubstützen (V, VL, VR, HL, HR) und/oder das Hydraulikaggregat (6) von einer eine Rechnereinheit umfassenden Steuereinheit computergesteuert angesteuert werden,
und wobei Daten zu der jeweiligen Neigung des Tragkörpers (11) um die beiden Schwenkachsen (10, 20) gegenüber der horizontalen Ausrichtung durch jeweils mindestens einen Neigungssensor (15, 25) erfasst und an die Steuereinheit übermittelt werden,
die anhand der übermittelten Daten Steuersignale erzeugt, vermittels derer die Hubstützen (V, VL, VR, HL, HR) zum Ausrichten des Tragkörpers (11) angesteuert werden,
**gekennzeichnet durch**
folgende Verfahrensschritte:
- mindestens eine erste Hubstütze (V, VL, VR), die bezüglich der ersten Schwenkachse (10) auf einer ersten Seite des Tragkörpers (11) angeordnet ist, wird zumindest soweit eingefahren oder ausgefahren, bis der erste Neigungssensor (15) sowohl eine Veränderung der Neigung des Tragkörpers (11) um die erste Schwenkachse (10) als auch eine erste Zwischenausrichtung des Tragkörpers (11) erfasst, die bezüglich der ersten Schwenkachse (10) von der vorbestimmten Ausrichtung des Tragkörpers (11) um einen vorgegebenen Zwischenwinkel (α) abweicht,
- eine zweite Hubstütze (HL, HR), die der mindestens einen ersten Hubstütze (V, VL, VR) bezüglich der ersten Schwenkachse (10) gegenüberliegt, wird zumindest soweit ausgefahren, bis der zweite Neigungssensor (25) sowohl eine Veränderung der Neigung des Tragkörpers (11) um die zweite Schwenkachse (20) als auch eine zweite Zwischenausrichtung des Tragkörpers (11) erfasst, die bezüglich der zweiten Schwenkachse (20) von der vorbestimmten Ausrichtung des Tragkörpers (11) um einen vorgegebenen Zwischenwinkel (β) abweicht,
- eine dritte Hubstütze (HR, HL), die der zweiten Hubstütze (HL, HR) bezüglich der zweiten Schwenkachse (20) gegenüberliegt, wird soweit ausgefahren, bis der zweite Neigungssensor (25) bezüglich der zweiten Schwenkachse (20) die vorbestimmte Ausrichtung des Tragkörpers (11) erfasst,
- falls der erste Neigungssensor (15) dann eine Ausrichtung des Tragkörpers (11) erfasst, die bezüglich der ersten Schwenkachse (10) von der vorbestimmten Ausrichtung des Tragkörpers (11) abweicht, wird die mindestens eine erste Hubstütze (V, VL, VR) soweit eingefahren oder ausgefahren, bis der erste Neigungssensor (15) bezüglich der ersten Schwenkachse (10) die vorbestimmte Ausrichtung des Tragkörpers (11) erfasst.

2. Verfahren nach Anspruch 1, **dadurch gekennzeichnet, dass** die vorbestimmte Ausrichtung eine horizontale Ausrichtung ist.

3. Verfahren nach Anspruch 1 oder 2, **dadurch gekennzeichnet, dass** in der ersten Zwischenausrichtung die erste Seite des Tragkörpers (11) oberhalb der bezüglich der ersten Schwenkachse (10) gegenüberliegenden Seite des Tragkörpers (11) liegt.

4. Verfahren nach einem der vorherigen Ansprüche, **dadurch gekennzeichnet, dass** die zweite Hubstütze (HL, HR) auf der Seite des Tragkörpers (11) liegt, die vor dem Ausfahren der zweiten Hubstütze (HL, HR) unterhalb der dieser Seite bezüglich der zweiten Schwenkachse (20) gegenüberliegenden Seite des Tragkörpers (11) liegt.

5. Verfahren nach einem der vorherigen Ansprüche, **dadurch gekennzeichnet, dass** in der zweiten Zwischenausrichtung die Seite des Tragkörpers (11), an welcher die zweite Hubstütze (HL, HR) angeordnet ist, oberhalb der bezüglich der zweiten Schwenkachse (20) gegenüberliegenden Seite des Tragkörpers (11) liegt.

6. Verfahren nach einem der vorherigen Ansprüche, **dadurch gekennzeichnet, dass** der Zwischenwinkel (α, β) zwischen 0,04° und 2°, vorzugsweise zwischen 0,06° und 1° und insbesondere zwischen 0,08° und 0,5° liegt.

7. Verfahren nach einem der Ansprüche 1 bis 6, **dadurch gekennzeichnet, dass** der Tragkörper (11) ein sich im Stillstand befindender und an ein Zugfahrzeug angekoppelter Fahrzeuganhänger, insbesondere ein LKW-Sattelanhänger oder ein Wohnwagen ist.

8. Verfahren nach Anspruch 7, **dadurch gekennzeichnet, dass** in einem ersten Verfahrensschritt mindestens eine vordere Hubstütze (V, VL, VR), die bezüglich der ersten Schwenkachse (10) in einem vorderen Bereich des Anhängers angeordnet ist, zumindest soweit ausgefahren wird, bis der vordere Bereich des Anhängers soweit angehoben ist, dass der Anhänger durch Vorfahren des Zugfahrzeugs von diesem abgekoppelt werden kann.

9. Verfahren nach Anspruch 8, **dadurch gekennzeichnet, dass** die erste Seite des Tragkörpers (11) durch den vorderen Bereich des Anhängers gebildet wird, und dass die mindestens eine erste Hubstütze (V, VL, VR) zum Erreichen der ersten Zwischenausrichtung des Tragkörpers (11) eingefahren wird.

10. Verfahren nach einem der Ansprüche 1 bis 6, **dadurch gekennzeichnet, dass** der Tragkörper (11) ein Gestell oder ein Tisch einer Handhabungsvorrichtung ist.

11. Verfahren nach einem der vorherigen Ansprüche, **dadurch gekennzeichnet, dass** die mindestens eine erste Hubstütze, die bezüglich der ersten Schwenkachse (10) auf einer ersten Seite des Tragkörpers (11) angeordnet ist, durch mindestens zwei erste Hubstützen (VL, VR) gebildet ist, die bezüglich der zweiten Schwenkachse (20) auf einander gegenüberliegenden Seiten des Tragkörpers (11) angeordnet sind.

12. Verfahren nach Anspruch 11, **dadurch gekennzeichnet, dass** die mindestens zwei ersten Hubstützen (VL, VR) über eine Leitungsverzweigung und eine gemeinsame Hydraulikleitung (51b) an ein Hydraulikaggregat (6) angeschlossen sind.

13. Verfahren nach Anspruch 12, **dadurch gekennzeichnet, dass** zwischen der Leitungsverzweigung und dem gemeinsamen Hydraulikaggregat (6) ein gemeinsames Absperrventil (91) zwischengefügt ist, oder dass zwischen der Leitungsverzweigung und jeder der beiden ersten Hubstützen (VL, VR) jeweils ein eigenes Absperrventil (91, 92) zwischengefügt ist.

14. Verfahren nach einem der vorherigen Ansprüche, **dadurch gekennzeichnet, dass** zwischen dem Hydraulikaggregat (6) und jeder Hubstütze (V, VL, VR, HL, HR) jeweils ein Stromregelventil (71, 72, 73, 74), vorzugsweise jeweils in Kombination mit Rückschlagventilen, eingefügt ist.

15. Verfahren nach einem der vorherigen Ansprüche, **dadurch gekennzeichnet, dass** nach Abschluss des Verfahrens alle Hubstützen (V, VL, VR, HL, HR) gemeinsam eingefahren oder ausgefahren werden, und dass danach die Neigung des Tragkörpers (11) um die beiden Schwenkachsen (10, 20) gegenüber der vorbestimmten Ausrichtung durch die Neigungssensoren (15, 25) erfasst wird, und dass das Verfahren zumindest teilweise erneut durchgeführt wird, falls mindestens ein Neigungssensor (15, 25) eine von der vorbestimmten Ausrichtung des Tragkörpers (11) abweichende Ausrichtung des Tragkörpers (11) erfasst.

## Claims

1. Method for electrohydraulically aligning a stationary support body (11), in particular a vehicle or vehicle body, by means of lift supports (V, VL, VR, HL, HR) in a predetermined alignment,
wherein by adjusting the lift supports (V, VL, VR, HL, HR), the support body (11) can be inclined about two pivot axes (10, 20) in two planes that are different from one another with respect to a horizontal alignment,
wherein the lift supports (V, VL, VR, HL, HR) are actuated by a hydraulic unit (6) for retraction and/or extension,
wherein the lift supports (V, VL, VR, HL HR) and/or the hydraulic unit (6) are computer-controlled by a control unit comprising a computer unit,
and wherein data regarding the respective inclination of the support body (11) about the two pivot axes (10, 20) with respect to the horizontal alignment are detected by respectively at least one inclination sensor (15, 25) and transferred to the control unit,
which produces control signals based on the transferred data, by means of which the lift supports (V, VL, VR, HL, HR) are controlled to align the support body (11),
**characterized by**
the following method steps:
- at least one first lift support (V, VL, VR), which is arranged on a first side of the support body (11) relative to the first pivot axis (10), is at least retracted or extended until the first inclination sensor (15) detects both a change in the inclination of the support body (11) about the first pivot axis (10) and a first intermediate alignment of the support body (11), which, relative to the first pivot axis (10), deviates from the predetermined alignment of the support body (11) by a predetermined intermediate angle (α),
- a second lift support (HL, HR), which is opposite the at least one first lift support (V, VL, VR) relative to the first pivot axis (10), is at least extended until the second inclination sensor (25) detects both a change in the inclination of the support body (11) about the second pivot axis (20) and a second intermediate alignment of the support body (11), which, relative to the second pivot axis (20), deviates from the predetermined alignment of the support body (11) by a predetermined intermediate angle (β),
- a third lift support (HL, HR), which is opposite the second lift support (HL, HR) relative to the second pivot axis (20), is extended until the second inclination sensor (25) detects the predetermined alignment of the support body (11) relative to the second pivot axis (20),
- if the first inclination sensor (15) then detects an alignment of the support body (11), which deviates from the predetermined alignment of the support body (11) relative to the first pivot axis (10), the at least one first lift support (V, VL, VR) is retracted or extended until the first inclination sensor (15) detects the predetermined alignment of the support body (11) relative to the first pivot axis (10).

2. Method according to Claim 1, **characterized in that** the predetermined alignment is a horizontal alignment.

3. Method according to Claim 1 or 2, **characterized in that** in the first intermediate alignment, the first side of the support body (11) lies above the opposite side of the support body (11) relative to the first pivot axis (10).

4. Method according to one of the preceding claims, **characterized in that** the second lift support (HL, HR) lies on the side of the support body (11) that, prior to extending the second lift support (HL, HR), lies below the side of the support body (11) that is opposite this side relative to the second pivot axis (20).

5. Method according to one of the preceding claims, **characterized in that** in the second intermediate alignment, the side of the support body (11), on which the second lift support (HL, HR) is arranged, lies above the opposite side of the support body (11) relative to the second pivot axis (20).

6. Method according to one of the preceding claims, **characterized in that** the intermediate angle (α, β) is between 0.04° and 2°, preferably between 0.06° and 1° and in particular between 0.08° and 0.5°.

7. Method according to one of Claims 1 to 6, **characterized in that** the support body (11) is a stationary vehicle trailer coupled to a towing vehicle, in particular is a semi-trailer truck or a caravan.

8. Method according to Claim 7, **characterized in that** in a first method step, at least one front lift support (V, VL, VR), which is arranged in a front section of the trailer relative to the first pivot axis (10), is at least extended until the front section of the trailer is raised to such an extent that the trailer can be uncoupled from the towing vehicle by driving said towing vehicle forward.

9. Method according to Claim 8, **characterized in that** the first side of the support body (11) is formed by the front section of the trailer, and **in that** the at least one first lift support (V, VL, VR) is retracted to achieve a first intermediate alignment of the support body (11).

10. Method according to one of Claims 1 to 6, **characterized in that** the support body (11) is a frame or a table of a handling device.

11. Method according to one of the preceding clams, **characterized in that** the at least one first lift support, which is arranged on a first side of the support body (11) relative to the first pivot axis (10), is formed by at least two first lift supports (VL, VR), which are arranged on opposite sides of the support body (11) relative to the second pivot axis (20).

12. Method according to Claim 11, **characterized in that** the at least two first lift supports (VL, VR) are connected to a hydraulic unit (6) via a line branch and a common hydraulic line (51b).

13. Method according to Claim 12, **characterized in that** a common shut-off valve (91) is interposed between the line branch and the common hydraulic unit (6), or **in that** a separate shut-off valve (91, 92) is respectively interposed between the line branch and each of the two first lift supports (VL, VR).

14. Method according to one of the preceding claims, **characterized in that** a flow control valve (71, 72, 73, 74), preferably respectively in combination with non-return valves, is inserted between the hydraulic unit (6) and each lift support (V, VL, VR, HL, HR).

15. Method according to one of the preceding claims, **characterized in that** after completion of the method, all lift supports (V, VL, VR, HL, HR) are collectively retracted or extended, and **in that** subsequently the inclination of the support body (11) about the two pivot axes (10, 20) with respect to the predetermined alignment is detected by the inclination sensors (15, 25), and **in that** the method is at least partially carried out again if at least one inclination sensor (15, 25) detects an alignment of the support body (11) deviating from the predetermined alignment of the support body (11).

## Revendications

1. Procédé d'alignement électrohydraulique d'un corps porteur (11) se trouvant à l'arrêt, en particulier d'un véhicule ou d'une carrosserie de véhicule, au moyen de supports de levage (V, VL, VR, HL, HR) dans un alignement prédéterminé,
sachant qu'en réglant les supports de levage (V, VL, VR, HL, HR), le corps porteur (11) peut être incliné autour de deux axes de pivotement (10, 20) dans deux plans différents l'un de l'autre par rapport à un alignement horizontale,
sachant que les supports de levage (V, VL, VR, HL, HR) peuvent être actionnés par un groupe hydraulique (6) pour être sortis et/ou rentrés, sachant que les supports de levage (V, VL, VR, HL, HR) et/ou le groupe hydraulique (6) sont commandés de manière informatisée par une unité de commande comprenant un ordinateur,
et sachant que des données pour l'inclinaison respective du corps porteur (11) autour de deux axes de pivotement (10, 20) par rapport à l'alignement horizontal, sont saisies par respectivement au moins un capteur d'inclinaison (15, 25) et transmises à l'unité de commande,
qui produit à l'aide des données transmises des signaux de commande à l'aide desquels les supports de levage (V, VL, VR, HL, HR) sont commandés pour aligner le corps porteur (11),
**caractérisé par**
les étapes de procédé suivantes :
- au moins un premier support de levage (V, VL, VR), qui est disposé par rapport au premier axe de pivotement (10) sur un premier côté du corps porteur (11), est au moins rentré ou sorti jusqu'à ce que le premier capteur d'inclinaison (15) saisisse tant une modification de l'inclinaison du corps porteur (11) autour du premier axe de pivotement (10) qu'une première alignement intermédiaire du corps porteur (11), qui, par rapport au premier axe de pivotement (10), s'écarte de l'alignement prédéterminé du corps porteur (11) d'un angle intermédiaire (α) prédéfini,
- un deuxième support de levage (HL, HR), qui fait face au moins à un premier support de levage (V, VL, VR) par rapport au premier axe de pivotement (10), est au moins sorti jusqu'à ce que le deuxième capteur d'inclinaison (25) saisisse tant une modification de l'inclinaison du corps porteur (11) autour du deuxième axe de pivotement (20) qu'une deuxième alignement intermédiaire du corps porteur (11), qui, par rapport au deuxième axe de pivotement (20), s'écarte de l'alignement prédéterminé du corps porteur (11) d'un angle intermédiaire (β) prédéfini,
- un troisième support de levage (HR, HL), qui fait face au deuxième support de levage (HL, HR) par rapport au deuxième axe de pivotement (20), qui est sorti jusqu'à ce que le deuxième capteur d'inclinaison (25) saisisse l'alignement prédéterminé du corps porteur (11) par rapport au deuxième axe de pivotement (20),
- au cas où le premier capteur d'inclinaison (15) saisit ensuite un alignement du corps porteur (11), qui s'écarte de l'alignement prédéterminé du corps porteur (11) par rapport au premier axe de pivotement (10), au moins un premier support de levage (V, VL, VR) sera rentré ou sorti jusqu'à ce que le premier capteur d'inclinaison (15) saisisse l'alignement prédéterminé du corps porteur (11) par rapport au premier axe de pivotement (10).

2. Procédé selon la revendication 1, **caractérisé en ce que** l'alignement prédéterminé est un alignement horizontal.

3. Procédé selon la revendication 1 ou 2, **caractérisé en ce que** dans le premier alignement intermédiaire, le premier côté du corps porteur (11) se situe au- dessus du côté du corps porteur (11) opposé par rapport au premier axe de pivotement (10).

4. Procédé selon l'une quelconque des revendications précédentes, **caractérisé en ce que** le deuxième support de levage (HL, HR) se situe sur le côté du corps porteur (11), qui se trouve avant la sortie du deuxième support de levage (HL, HR) en dessous du côté du corps porteur (11) opposé à ce côté par rapport au deuxième axe de pivotement (20).

5. Procédé selon l'une quelconque des revendications précédentes, **caractérisé en ce que** dans le deuxième alignement intermédiaire, le côté du corps porteur (11) sur lequel est disposé le deuxième support de levage (HL, HR), se situe au-dessus du côté du corps porteur (11) opposé par rapport au deuxième axe de pivotement (20).

6. Procédé selon l'une quelconque des revendications précédentes, **caractérisé en ce que** l'angle intermédiaire (a, β) se situe entre 0,04° et 2°, de préférence entre 0,06° et 1° et en particulier entre 0,08° et 0,5°.

7. Procédé selon l'une quelconque des revendications 1 à 6, **caractérisé en ce que** le corps porteur (11) est une remorque de véhicule se trouvant à l'arrêt et accouplé à un véhicule tracteur, en particulier une semi-remorque ou une caravane.

8. Procédé selon la revendication 7, **caractérisé en ce que** dans une première étape de procédé, au moins un support de levage (V, VL, VR) avant, qui est disposé dans une zone avant de la remorque par rapport au premier axe de pivotement (10), est au moins sorti jusqu'à ce que la zone avant de la remorque soit relevée jusqu'au point où la remorque peut être découplée par avance du véhicule tracteur.

9. Procédé selon la revendication 8, **caractérisé en ce que** le premier côté du corps porteur (11) est formé par la zone avant de la remorque et **en ce qu'**au moins un premier support de levage (V, VL, VR) est rentré pour obtenir le premier alignement intermédiaire du corps porteur (11).

10. Procédé selon l'une quelconque des revendications 1 à 6, **caractérisé en ce que** le corps porteur (11) est un châssis ou une table d'un dispositif de manutention.

11. Procédé selon l'une quelconque des revendications précédentes, **caractérisé en ce que** au moins un premier support de levage, qui est disposé sur un premier côté du corps porteur (11) par rapport au premier axe de pivotement (10), est formé par au moins deux premiers supports de levage (VL, VR), qui sont disposés sur les côtés du corps porteur (11) opposés l'un à l'autre par rapport au deuxième axe de pivotement (20).

12. Procédé selon la revendication 11, **caractérisé en ce qu'**au moins les deux premiers supports de levage (VL, VR) sont raccordés à un groupe hydraulique (6) par un branchement de conduite et une conduite hydraulique (51b) commune.

13. Procédé selon la revendication 12, **caractérisé en ce qu'**entre le branchement de conduite et le groupe hydraulique (6) commun est intercalée une soupape d'arrêt (91) commune ou **en ce qu'**entre le branchement de conduite et chacun des deux premiers supports de levage (VL, VR) est intercalée une soupape d'arrêt (91, 92) propre.

14. Procédé selon l'une quelconque des revendications précédentes, **caractérisé en ce qu'**entre le groupe hydraulique (6) et chaque support de levage (V, VL, VR, HL, HR) est respectivement intégrée un régulateur de débit (71, 72, 73, 74) de préférence respectivement en combinaison avec un clapet anti-retour.

15. Procédé selon l'une quelconque des revendications précédentes, **caractérisé en ce que** tous les supports de levage (V, VL, VR, HL, HR) sont tous rentrés ou sortis ensemble une fois le procédé terminé et **en ce qu'**ensuite l'inclinaison du corps porteur (11) autour des deux axes de pivotement (10, 20) est saisie avec les capteurs d'inclinaison (15, 25) par rapport à l'alignement prédéterminé et **en ce que** le procédé est à nouveau exécuté au moins en partie, au cas où au moins un capteur d'inclinaison (15, 25) saisit un alignement du corps porteur (11) s'écartant de l'alignement prédéterminé du corps porteur (11).
